# EUROPEAN PATENT SPECIFICATION

(11) **EP 4 194 813 B1**
(45) Date of publication and mention of the grant of the patent: **19.02.2025**
(21) Application number: 21020617.3
(22) Date of filing: 07.12.2021
(51) Int. Cl.: G01C 21/36, G06Q 50/06, H04W 4/02

(54) **METHOD AND APPARATUS FOR ASSISTING A DRIVER OF A PLUG-IN ELECTRIC VEHICLE**
VERFAHREN UND VORRICHTUNG ZUR UNTERSTÜTZUNG EINES FAHRERS EINES PLUG-IN-ELEKTROFAHRZEUGS
PROCÉDÉ ET APPAREIL D'ASSISTANCE AU CONDUCTEUR D'UN VÉHICULE ÉLECTRIQUE RECHARGEABLE

(43) Date of publication of application: 14.06.2023
(73) Proprietor: Dr. Ing. h.c. F. Porsche AG, 70435 Stuttgart (DE)
(72) Inventor: Foligno, Mark, 10245 Berlin (DE)

(56) References cited:
- US-A1- 2011 169 647
- US-A1- 2012 259 665
- US-A1- 2017 168 493
- US-A1- 2018 295 469

## Description

The present invention pertains to a method of assisting a driver of a plug-in electric vehicle. The invention further relates to a corresponding data processing apparatus, a corresponding computer program, and a corresponding computer-readable medium.

### Background art

US9610853B1, US20210231450A1, US9714837B2, and US10065517B1 each disclose a method of locating a charging station wherein multiple locations are prioritized according to, inter alia, distance and availability.

US 2017/168493 A1, US 2018/295469 A1, and US 2012/259665 A1 each disclose the subject-matter of the first part of claim 1.

Yet, users of the charging station thus located may find themselves vulnerable to harassment or assault.

### Disclosure of the invention

The invention provides a method of assisting a driver of a plug-in electric vehicle (PEV), a corresponding data processing apparatus, a corresponding computer program, and a corresponding computer-readable medium as per the independent claims.

The proposed approach advantageously mitigates the risk of personal injury to PEV drivers and passengers while charging.

Embodiments of the invention are set out in the dependent claims.

### Brief description of drawings

The sole figure schematically depicts a use case of the invention.

### Embodiment of the invention

The drawing illustrates an electronic street map (10) as may be visualized using a web mapping platform or consumer application. One such platform is offered by Google LLC under the name of "Google Maps" and may be accessed by means of an application programming interface (API). Similar georeferenced maps are served by various providers over the Internet, for example, by means of the Web Map Service (WMS) protocol standardized through the Open Geospatial Consortium (OGC). Typically, such images are produced by a map server from geospatial data provided by a geographic information system (GIS) database.

As will be readily appreciated, the various features depicted on the map (10) are represented by different symbols. In the use case at hand, the map (10) shows the vicinity of a plug-in electric vehicle (11) within a radius of X, which comprises two charging stations (12, 13).

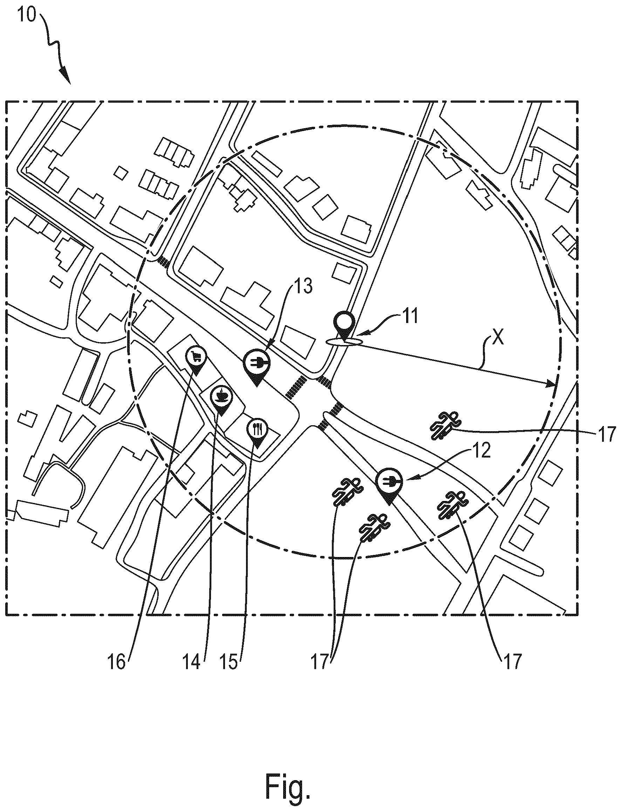

An embodiment of the invention may take the form of an advanced driver assistance system (ADAS). Given the present use case, such system, to minimize the driver's vulnerability while charging the vehicle (11), would search the map (10) of Figure 1 for the charging stations (12, 13) and prioritize these stations (12, 13) based on established security criteria.

For instance, proximity of a charging station to other points of interest (POIs) may constitute a criterion that would cause the ADAS to favor that station over an alternative located in a secluded environment. In the scenario at hand, no open venues (14, 15, 16) appear to surround the first charging station (12), while the map (10) shows a café (14), restaurant (15), and shop (16) within 100 m from the second charging station (13). Similarly, video surveillance, such as by closed-circuit television (CCTV) cameras, may positively influence a charging site's security rating.

Conversely, past criminal incidents (17) reported by police departments nearby a charging station could prompt the ADAS to downgrade that station. In the present example, multiple security-related incidents (17) have been registered close to the first charging station (12), leading the ADAS to classify its district as a high-crime neighborhood.

Hence, in a recommendation issued by the ADAS, the second charging station (13) would typically take precedence over the first charging station (12). It is well understood that conventional search criteria such as advertised operating hours, vacancy of charging points, or acceptance of specific payment cards may further contribute to a charging station's rating without departing from the scope of the invention.

In a preferred embodiment, the ADAS may, in addition to the opening hours of the nearby venues (14, 15, 16), further account for the charging rate of the first charging station (12) and charging level of the vehicle (11). To avoid that the vehicle (11) is still charging when the nearby venues (14, 15, 16) close, the ADAS of this embodiment would also calculate the vehicle's charging time at each available charging station (12, 13) within the radius X, estimate the charging end time, and determine whether the latter falls within the established opening hours. In this case, the first charging station (12) would only be prioritized if the venues remain opened until charging is completed.

## Claims

1. Method of assisting a driver of a plug-in electric vehicle (11),
comprising
- accessing a map (10) of a vicinity of the vehicle (11),
- searching the map (10) for charging stations (12, 13),
- prioritizing the charging stations (12, 13) based on security criteria and vacancy of charging points at the charging stations (12, 13), and
- communicating the prioritized charging station (13) to the driver as a recommendation,
wherein
the security criteria encompass distance of the charging stations (12, 13) to sites of criminal incidents (17) and proximity of the charging stations (12, 13) to other points of interest comprising at least one of the following venues (14, 15, 16):
- a café (14),
- a restaurant (15), or
- a shop (16),
**characterized in that**
- the venues are disregarded outside opening hours,
- the security criteria further encompass presence of surveillance cameras on site,
- the prioritizing is further based on advertised operating hours of the charging stations (12, 13) and acceptance of payment cards at the charging stations (12, 13) and
- the method further comprises calculating charging time at each of the available charging stations (12, 13) based on its charging rate and charging level of the vehicle (11), estimating charging end time, and determining whether the latter falls within the established opening hours of the nearby venues (14, 15, 16), wherein the charging station (12, 13) is only prioritized if the venues (14, 15, 16) remain opened until charging is completed.

2. Data processing apparatus having means for carrying out the method as per claim 1.

3. Computer program adapted to perform the method as per claim 1.

4. Computer-readable medium having stored thereon the program as per claim 3.

## Patentansprüche

1. Verfahren zur Unterstützung eines Fahrers eines Plug-in-Elektrofahrzeugs (11), umfassend
- Zugreifen auf eine Karte (10) einer nahen Umgebung des Fahrzeugs (11),
- Absuchen der Karte (10) nach Ladestationen (12, 13),
- Priorisieren der Ladestationen (12, 13) basierend auf Sicherheitskriterien und freien Ladepunkten an den Ladestationen (12, 13), und
- Übermitteln der priorisierten Ladestation (13) als eine Empfehlung an den Fahrer,
wobei
die Sicherheitskriterien eine Entfernung der Ladestationen (12, 13) von Orten krimineller Vorfälle (17) und eine Nähe der Ladestationen (12, 13) zu anderen Orten von Interesse umfassen, die mindestens eine der folgenden Einrichtungen (14, 15, 16) umfassen:
- ein Café (14),
- ein Restaurant (15) oder
- ein Geschäft (16),
**dadurch gekennzeichnet, dass**
- die Einrichtungen außerhalb der Öffnungszeiten nicht berücksichtigt werden,
- die Sicherheitskriterien ferner ein Vorhandensein von Überwachungskameras vor Ort umfasst,
- die Priorisierung ferner auf den angegebenen Betriebszeiten der Ladestationen (12, 13) und der Annahme von Zahlungskarten an den Ladestationen (12, 13) basiert und
- das Verfahren ferner ein Berechnen einer Ladezeit an jeder der verfügbaren Ladestationen (12, 13) basierend auf deren Ladegeschwindigkeit und dem Ladezustand des Fahrzeugs (11), ein Schätzen der Ladeendzeit und ein Bestimmen, ob die Letztere innerhalb der festgestellten Öffnungszeiten der nahegelegenen Einrichtungen (14, 15, 16) liegt, umfasst, wobei die Ladestation (12, 13) nur dann priorisiert wird, wenn die Einrichtungen (14, 15, 16) geöffnet bleiben, bis das Laden abgeschlossen ist.

2. Datenverarbeitungsvorrichtung, die Mittel zum Durchführen des Verfahrens nach Anspruch 1 aufweist.

3. Computerprogramm, ausgestaltet zum Durchführen des Verfahrens nach Anspruch 1.

4. Computerlesbares Medium, auf dem das Programm nach Anspruch 3 gespeichert ist.

## Revendications

1. Procédé d'assistance au conducteur d'un véhicule électrique rechargeable (11), comprenant
- l'accès à une carte (10) de l'environnement du véhicule (11),
- la recherche sur la carte (10) des stations de recharge (12, 13),
- l'établissement des priorités des stations de recharge (12, 13) sur la base de critères de sécurité et de l'absence de stations de recharge aux stations de recharge (12, 13), et
- la communication de la station de recharge prioritaire (13) au conducteur en tant que recommandation,
dans lequel
les critères de sécurité incluent la distance des stations de recharge (12, 13) par rapport à des lieux d'incidents criminels (17) et la proximité des stations de recharge (12, 13) avec d'autres points d'intérêt comprenant au moins l'un des lieux suivants (14, 15, 16) :
- un café (14),
- un restaurant (15), ou
- un magasin (16),
**caractérisé en ce que**
- les lieux sont négligés en dehors des heures d'ouverture,
- les critères de sécurité incluent également la présence de caméras de surveillance sur place,
- la priorisation est en outre basée sur les heures de fonctionnement annoncées des stations de recharge (12, 13) et l'acceptation des cartes de paiement aux stations de recharge (12, 13) et
- le procédé comprend en outre le calcul du temps de recharge à chacune des stations de recharge disponibles (12, 13) sur la base de son taux de recharge et du niveau de recharge du véhicule (11), l'estimation du temps de fin de recharge, et la détermination du fait que ce dernier tombe dans les heures d'ouverture établies des lieux voisins (14, 15, 16), dans lequel la station de recharge (12, 13) est prioritaire uniquement si les lieux (14, 15, 16) restent ouverts jusqu'à ce que le chargement soit terminé.

2. Appareil de traitement de données ayant des moyens pour effectuer le procédé selon la revendication 1.

3. Programme informatique adapté pour réaliser le procédé selon la revendication 1.

4. Support lisible par ordinateur sur lequel est stocké le programme selon la revendication 3.
